# EUROPÄISCHE PATENTSCHRIFT

(11) **EP 2 727 776 B1**
(45) Veröffentlichungstag und Bekanntmachung des Hinweises auf die Patenterteilung: **04.10.2017**
(21) Anmeldenummer: 13004246.8
(22) Anmeldetag: 28.08.2013
(51) Int. Cl.: B60R 21/2165

(54) **Airbag-Abdeckung mit mindestens einer Klappe**
Air bag cover with at least one flap
Couvercle pour airbag doté d'au moins un clapet

(30) Priorität: 31.10.2012 DE 102012021313
(43) Veröffentlichungstag der Anmeldung: 07.05.2014
(73) Patentinhaber: K.L. Kaschier- und Laminier GmbH, 48455 Bad Bentheim-Gildehaus (DE)
(72) Erfinder: Höing, Maik, 48712 Gescher (DE); Roring, Albert, 48599 Gronau-Epe (DE); Wehninck, Rembert Schulze, 81667 München (DE)
(74) Vertreter: Cohausz Hannig Borkowski Wißgott

(56) Entgegenhaltungen:
- EP-A1- 1 393 994
- EP-A1- 1 477 367
- EP-A1- 1 815 977
- EP-A1- 2 057 044
- WO-A1-02/066298
- WO-A1-03/033259

## Beschreibung

Die Erfindung betrifft eine Airbag-Abdeckung mit mindestens einer Klappe, die im Material der Abdeckung von den die Klappenränder bildenden Sollbruchlinien und einem Scharnierrand umgrenzt ist.

Es sind Airbag-Abdeckungen aus Kunststoff bekannt, die eine oder zwei Klappen bilden, die jeweils an drei Rändern Sollbruchlinien besitzen und nach Auslösen des Airbags dort aufreißen, und an dem vierten Rand ein Scharnier bilden, um das die Klappe verschwenkt, ohne dort abzureißen, so dass sichergestellt ist, dass die Klappe nicht in den Innenraum des Kraftfahrzeugs fliegt. Dieser sichere Halt der Klappe im Bereich des Scharniers wird durch zusätzliche nicht reißende Fäden im Scharnierbereich erreicht, wie dies aus der EP 2 057 044 bekannt ist. Diese bekannten Airbag-Abdeckungen sind aufwändig in der Herstellung. Aus der EP1477367 A1 ist ein Verbundwertstoff nach dem Oberbegriff von Anspruch 1 bekannt, der eine einzige gewebeartige Dekorschicht aufweist, die mit einer einzigen folienartigen Zwischenschicht verbunden ist. Die folienartige Zwischenschicht ist von einer Kunststofftragschicht hinterspritzt und verhindert, dass der gespritzte Kunststoff in die Dekorschicht eindringt. Aufgabe der Erfindung ist es, eine Airbag-Abdeckung der eingangs genannten Art so zu verbessern, dass sie einfach in der Herstellung und Verarbeitung ist.

Diese Aufgabe wird erfindungsgemäß dadurch gelöst, dass das Material der Abdeckung ein eigenverstärkter thermoplastischer Verbundwerkstoff ist, der mehrere übereinander liegende Lagen aus thermoplastischem Polypropylen oder Polyester aufweist, wobei mindestens zwei Lagen aus homogener Polypropylenfolie, copolymerhaltiger Polyolefinfolie, homogener Polyesterfolie oder copolymerhaltiger Polyesterfolie mit mindestens zwei Verstärkungslagen abwechseln, bei denen entweder das Polypropylen oder der Polyester band-, faserförmig oder fadenförmig ist, oder bei denen die mindestens zwei Verstärkungslagen Polypropylen-, bzw. Polyester-Bänder und/oder Polypropylen-, bzw. Polyester-Fasern und/oder Polypropylen-, bzw. Polyester-Fäden aufweisen.

Der Aufbau ist vorzugsweise ein "sortenreines System", d. h. die Zwischenfolien und die Verstärkungslagen sind immer aus derselben chemischen Grundsubstanz. Eine "Mischung" aus Polypropylenfolie und Polyesterverstärkungen oder umgekehrt ist aber auch möglich.

Eine solche Airbag-Abdeckung ist einfach in der Herstellung, da sie nur aus einer einzigen Materialart besteht. Weitere Materialien müssen nicht eingebracht werden. Insbesondere ist es nicht erforderlich, weitere Materialien in Form von Fäden oder Geweben einzubringen. Insbesondere ist es nicht erforderlich, das Material der Abdeckung im Bereich des Scharniers mit zusätzlichen Fäden oder spezial geformten Fäden auszustatten. Hierbei besitzt die erfindungsgemäße Abdeckung ein geringes Gewicht, ist thermisch verformbar, besitzt eine hohe Bruch- und Schlagfestigkeit, ist beständig gegen aggressive Flüssigkeiten und sehr abriebbeständig. Ferner ist das Material umweltschonend, da es wiederverwertbar ist.

Vorzugsweise wird vorgeschlagen, dass die Bänder, Fasern oder Fäden aus Polypropylen oder Polyester in den Verstärkungslagen ein Gewebe bilden, die unterschiedlich stark verstreckt sein können. Alternativ wird vorgeschlagen, dass die Bänder und/oder Fasern in den Verstärkungslagen ungeordnet kreuz und quer angeordnet sind.

Eine ausreichende Festigkeit bei leichter Verarbeitung wird erreicht, wenn das Polypropylen-, oder Polyester-Material der mehrlagigen Abdeckung eine Gesamtdicke von 0,35 bis 3 mm.

Um eine ausreichende Beweglichkeit der Klappe im Bereich des Scharniers zu erreichen, ohne dass es zu einem Abreißen der Klappe im Scharnierbereich kommt, wird vorgeschlagen, dass das Polypropylen-, oder Polyester-Material der mehrlagigen Abdeckung im Bereich des Scharniers mindestens eine Falte, Nut und/oder Rinne bildet, die längs des Scharniers verläuft.

Um das Material der Abdeckung sicher auf einer Unterlage und/oder auf dem Material der Abdeckung und/oder einer Abdeckung einfach und sicher zu befestigen und zu halten wird vorgeschlagen, dass die Oberseite und/oder die Unterseite des Materials der Abdeckung mit einer thermoplastischen Folie insbesondere aus Polyester oder Polypropylen kaschiert ist. Alternativ wird hierzu vorgeschlagen, dass die Oberseite und/oder die Unterseite des Materials der Abdeckung mit einem Glasfaserflies oder einem Glasfasergewebe kaschiert ist.

Ein Verfahren zum Herstellen einer solchen Falte, Nute oder Rinne ist besonders einfach und vorteilhaft durchführbar, durch Verwendung eines erwärmten Schwertes, zur Warmverformung des thermoplastischen Polypropylen-, oder Polyester-Verbundwerkstoffes im Bereich des Scharniers, wobei der Verbundwerkstoff vor der Verformung durch das Schwert zusätzlich noch erwärmt werden kann.

Vorteilhafte Ausführungsbeispiele der Airbag-Abdeckung und seiner Herstellung werden im Folgenden näher beschrieben.

Die Aribag-Abdeckung wird von einem starren und/oder steifen, plattenförmigen Kunststoffmaterial gebildet und ist damit ein relativ dünner, flacher, ebener, fester Gegenstand mit überall gleicher Dicke und begrenzter Elastizität (im Gegensatz zu einer Folie).

Die Airbag-Abdeckung besteht hierbei aus nur einem einzigen thermoplastischen Kunststoff-Material insbesondere aus thermoplastischen Polypropylen (PP). Das Material ist ein plattenförmiger eigenverstärkter Verbundwerkstoff (Compound/Composite), wobei sich homogene Polypropylen-, copolymere Polyolefin-, hogogene Polyester-, oder copolymere Polyesterfolien mit weiteren Verstärkungslagen abwechseln, die aus Polypropylen-, bzw. Polyester-Bändern bestehen, oder solche aufweisen. Hierbei bilden die Bänder eine dünne Schicht, in denen die Bänder entweder geordnet liegen insbesondere wie ein Gewebe gelegt oder verwebt sind, oder sie liegen ungeordnet kreuz und quer. Die Folien-Lagen und die Bänder-Lagen (Verstärkungslagen) wechseln einander ab und die Gesamtanzahl der Bänder-Lagen beträgt mindestens zwei insbesondere drei bis acht Lagen bei einer Gesamtdicke von 0,35 mm bis 3 mm. Unter Druck und Zufuhr von Wärme verschmelzen alle Schichten zu einer einzigen Platte, die nur aus Polypropylen-, bzw. Polyester-Schichten besteht.

Die weiteren zwischen oder auf den Folien-Lagen befindlichen Verstärkungslagen weisen in alternativen Ausführungen statt der Bänder Fasern oder Fäden auf, die wiederum aus Polypropylen-, bzw. Polyester-Folien bestehen und geordnet (auch als Gewebe) oder ungeordnet angeordnet sind.

In der plattenförmigen Airbag-Abdeckung sind eine oder zwei Klappen, die den Airbag bedecken, in der Weise eingebracht, dass innerhalb der Abdeckungsplatte an drei Rändern jeder Klappe Sollbruchlinien angeordnet sind, die die gesamte Platte durchdringen und nach dem Auslösen des Airbags die Klappe freigeben. An dem vierten Rand befindet sich ein länglicher Scharnierbereich um den die Klappe nach dem Auslösen verschwenkt ohne abzureißen. Die Sicherheit gegen ein Abreißen wird insbesondere durch die Bänder, Fasern oder Fäden in den Verstärkungslagen erreicht.

In einer weiteren, nicht dargestellten Ausführung ist der Deckel in der Unterseite einer Kunststoffschicht (insbesondere Spritzgussschicht aus Polypropylen mit Glasfasern) eingelassen, wobei zumindest an einer Seite die Sollbruchlinie nicht vom Material des Deckels, sondern außerhalb des Materials des Deckels in der Kunststoffschicht angeordnet ist.

In einer weiteren Ausführung wird die Sicherheit gegen ein Abreißen noch dadurch erhöht, dass im Bereich des Scharniers in die Platte mindestens eine Falte, eine Nut oder eine Rinne eingeformt wird, die längs der Scharnierlängserstreckung bzw. des Klappenrandes im Scharnier verläuft und dadurch eine zusätzliche Materiallänge quer zur Scharnierlängserstreckung erzeugt. Diese zusätzliche Materiallänge im Scharnierbereich gewährt genügend Weglänge beim Verschwenken der Klappe um das Scharnier, so dass sichergestellt ist, dass die Klappe nicht abreißt.

In einer weiteren Ausführung ist in einer ersten Alternative die Oberseite und/oder die Unterseite des Materials der Abdeckung mit einer thermoplastischen Folie insbesondere aus Polyester oder Polypropylen kaschiert. In einer zweiten Alternative ist die Oberseite und/oder die Unterseite des Materials der Abdeckung mit einem Glasfaserflies oder einem Glasfasergewebe kaschiert.

Zum Erzeugen der Falte(n), der Nut(en) oder der Rinne(n) wird vorzugsweise ein erwärmtes Schwert (heißes Schwert) verwendet, das in die Platte im Bereich des Scharniers hineingedrückt wird und hierbei das thermoplastische Material verformt, wobei das Material zusätzlich vor der Verformung partiell bzw. vollflächig erhitzt werden kann.

## Patentansprüche

1. Airbag-Abdeckung mit mindestens einer Klappe, die im Material der Abdeckung und/oder am Rand des Materials von den die Klappenränder bildenden Sollbruchlinien und einem Scharnierrand umgrenzt ist, **dadurch gekennzeichnet, dass** das Material der Abdeckung ein eigenverstärkter thermoplastischer Verbundwerkstoff ist, der mehrere übereinander liegende Lagen aus thermoplastischem Polypropylen oder Polyester aufweist, wobei mindestens zwei Lagen aus homogener Polypropylenfolie,
copolymerhaltiger Polyolefinfolie, homogener Polyesterfolie oder copolymerhaltiger Polyesterfolie mindestens zwei mit Verstärkungslagen abwechseln, bei
denen entweder das Polypropylen oder der Polyester band-, faserförmig oder fadenförmig ist, oder bei denen die mindestens zwei Verstärkungslagen Polypropylen-, bzw.
Polyester-Bänder und/oder Polypropylen-, bzw. Polyester-Fasern und/oder Polypropylen-, bzw. Polyester-Fäden aufweisen.

2. Airbag-Abdeckung nach Anspruch **1,dadurch gekennzeichnet, dass** die Bänder, Fasern oder Fäden aus Polypropylen oder Polyester in den Verstärkungslagen ein Gewebe bilden.

3. Airbag-Abdeckung nach Anspruch **1,dadurch gekennzeichnet, dass** die Bänder und/oder Fasern in den Verstärkungslagen ungeordnet kreuz und quer angeordnet sind.

4. Airbag-Abdeckung nach einem der vorherigen Ansprüche, **dadurch gekennzeichnet, dass** das Polypropylen-, oder Polyester-Material der mehrlagigen Abdeckung eine Gesamtdicke von 0,35 mm bis 3 mm aufweist.

5. Airbag-Abdeckung nach einem der vorherigen Ansprüche, **dadurch gekennzeichnet, dass** das Polypropylen-, oder Polyester-Material der mehrlagigen Abdeckung im Bereich des Scharniers mindestens eine Falte, Nut und/oder Rinne bildet, die längs des Scharniers verläuft.

6. Airbag-Abdeckung nach einem der vorherigen Ansprüche, **dadurch gekennzeichnet, dass** die Oberseite und/oder die Unterseite des Materials der Abdeckung mit einer thermoplastischen Folie insbesondere aus Polyester oder Polypropylen kaschiert ist.

7. Airbag-Abdeckung nach einem der Ansprüche 1 bis 5, **dadurch gekennzeichnet, dass** die Oberseite und/oder die Unterseite des Materials der Abdeckung mit einem Glasfaserflies oder einem Glasfasergewebe kaschiert ist.

8. Verfahren zum Herstellen mindestens einer Falte, Nut oder Rinne nach Anspruch 5, **gekennzeichnet durch** Verwendung eines heißen Schwertes, zur Warmverformung des thermoplastischen Polypropylen-, oder Polyester-Verbundwerkstoffes im Bereich des Scharniers.

9. Verfahren nach Anspruch 6, **dadurch gekennzeichnet, dass** die Platte vor der Verformung mit dem Schwert in den zu verformenden Bereichen oder vollflächig erwärmt wird.

## Claims

1. Airbag cover with at least one flap delimited, within the material of the cover and/or on the periphery of the material, by the preferential fracture lines forming the edges of the flap and by a hinged edge, **characterized in that** the material of the cover is an intrinsically reinforced thermoplastic composite material which comprises a plurality of mutually superposed plies made of thermoplastic polypropylene or polyester, where at least two plies made of homogeneous polypropylene film, of copolymer-containing polyolefin film, of homogeneous polyester film or of copolymer-containing polyester film alternate at least two with reinforcing plies in which either the polypropylene or the polyester takes the form of tape, fibre or thread, or where the at least two reinforcing plies comprise polypropylene tapes or, respectively, polyester tapes and/or polypropylene fibres or, respectively, polyester fibres and/or polypropylene threads or, respectively, polyester threads.

2. Airbag cover according to Claim 1, **characterized in that** the tapes, fibres or threads made of polypropylene or polyester in the reinforcing plies form a woven fabric.

3. Airbag cover according to Claim 1, **characterized in that** the arrangement of the tapes and/or fibres in the reinforcing plies is unordered with random orientation.

4. Airbag cover according to any of the preceding claims, **characterized in that** the total thickness of the polypropylene material or polyester material of the multiple-ply cover is from 0.35 mm to 3 mm.

5. Airbag cover according to any of the preceding claims, **characterized in that** the polypropylene material or polyester material of the multiple-ply cover forms, in the region of the hinge, at least one fold, groove and/or channel running along the hinge.

6. Airbag cover according to any of the preceding claims, **characterized in that** a thermoplastic film in particular made of polyester or polypropylene has been laminated to the upper side and/or the underside of the material of the cover.

7. Airbag cover according to any of Claims 1 to 5, **characterized in that** a non-woven glass-fibre fabric or a woven glass-fibre fabric has been laminated to the upper side and/or the underside of the material of the cover.

8. Process for the production of at least one fold, groove or channel according to Claim 5, **characterized by** use of a heated lance for the thermoforming of the thermoplastic polypropylene- or polyester-composite material in the region of the hinge.

9. Process according to Claim 6, **characterized in that**, before use of the lance for the thermoforming procedure, the regions of the sheet that are to be thermoformed are heated, or the entire surface of the sheet is heated.

## Revendications

1. Couvercle pour airbag doté d'au moins un clapet, qui est délimité dans le matériau et/ou sur le bord du matériau par les lignes de rupture formant les bords de clapet et par un bord articulé, **caractérisé en ce que** le matériau du couvercle est un matériau composite thermoplastique auto-renforcé, qui présente plusieurs couches superposées de polypropylène ou de polyester thermoplastique, dans lequel au moins deux couches de film de polypropylène homogène, de film de polyoléfine contenant un copolymère, de film de polyester homogène ou de film de polyester contenant un copolymère alternent au moins deux avec couches de renforcement, dans lesquelles soit le polypropylène soit le polyester est présent sous forme de bande, de fibre ou de fil, dans lesquelles lesdites au moins deux couches de renforcement présentent des bandes de polypropylène ou de polyester, et/ou des fibres de polypropylène ou de polyester, et/ou des fils de polypropylène ou de polyester.

2. Couvercle pour airbag selon la revendication 1, **caractérisé en ce que** les bandes, les fibres ou les fils de polypropylène ou de polyester dans les couches de renforcement forment un tissu.

3. Couvercle pour airbag selon la revendication 1, **caractérisé en ce que** les bandes et/ou les fibres dans les couches de renforcement sont disposés de façon désordonnée en croix et transversalement.

4. Couvercle pour airbag selon l'une quelconque des revendications précédentes, **caractérisé en ce que** le matériau de polypropylène ou de polyester du couvercle en plusieurs couches présente une épaisseur totale de 0,35 mm à 3 mm.

5. Couvercle pour airbag selon l'une quelconque des revendications précédentes, **caractérisé en ce que** le matériau de polypropylène ou de polyester du couvercle en plusieurs couches forme dans la région de l'articulation au moins un pli, une rainure et/ou une rigole.

6. Couvercle pour airbag selon l'une quelconque des revendications précédentes, **caractérisé en ce que** le côté supérieur et/ou le côté inférieur du matériau du couvercle est doublé d'un film thermoplastique en polyester ou en polypropylène.

7. Couvercle pour airbag selon l'une quelconque des revendications 1 à 5, **caractérisé en ce que** le côté supérieur et/ou le côté inférieur du matériau du couvercle est doublé d'une nappe de fibre de verre ou d'un tissu de fibre de verre.

8. Procédé de fabrication d'au moins un pli, une rainure ou une rigole selon la revendication 5, **caractérisé par** l'utilisation d'une lame chaude, pour la déformation à chaud du matériau composite de polypropylène ou de polyester thermoplastique dans la région de l'articulation.

9. Procédé selon la revendication 6, **caractérisé en ce que** l'on chauffe la plaque dans les zones à déformer ou entièrement avec la lame avant la déformation.
